# EUROPEAN PATENT APPLICATION

(11) **EP 2 538 474 A2**
(43) Date of publication of application: **26.12.2012**
(21) Application number: 12172989.1
(22) Date of filing: 21.06.2012
(51) Int. Cl.: H01M 4/86, H01M 8/12, H01M 4/90

(54) **Material for solid oxide fuel cell, cathode including the material, and solid oxide fuel cell including the material**

(30) Priority: 21.06.2011 KR 20110060232
(71) Applicant: Samsung Electronics Co., Ltd., Suwon-si, Gyeonggi-do, 443-742 (KR); Samsung Electro-Mechanics Co., Ltd, Suwon-si, Gyeonggi-do (KR)
(72) Inventor: Seo, Soo-yeon, Gyeonggi-do, (KR); Kwak, Chan, Gyeonggi-do, (KR); Park, Hee-jung, Gyeonggi-do (KR)
(74) Representative: Zijlstra, Robert Wiebo Johan

(57) **Abstract**

A material for a solid oxide fuel cell, the material including: a first compound having a perovskite crystal structure, a first ionic conductivity, a first electronic conductivity, and a first thermal expansion coefficient, wherein the first compound is represented by Formula 1 below; and a second compound having a perovskite crystal structure, a second ionic conductivity, a second electronic conductivity, and a second thermal expansion coefficient,

BaₐSr_{b}CoₓFe_{y}Z_{1-x-y}O_{3-δ}, Formula 1

wherein
Z is a transition metal element, a lanthanide element, or a combination thereof,
a and b satisfy 0.4 ≤ a ≤ 0.6 and 0.4 ≤ b ≤ 0.6, respectively,
x and y satisfy 0.6 ≤ x ≤ 0.9 and 0.1 ≤ y ≤ 0.4, respectively, and
δ is selected so that the first compound is electrically neutral.

## Description

### BACKGROUND OF THE INVENTION

The present disclosure relates to a material for a solid oxide fuel cell, a cathode including the material, and a solid oxide fuel cell including the material.

Solid oxide fuel cells (SOFCs) are highly-efficient and environmentally-friendly electrochemical power generation devices that directly convert chemical energy of a fuel gas (e.g., hydrogen or a hydrocarbon) into electrical energy. Recently, there have been efforts to commercialize SOFCs around the world.

A typical SOFC desirably uses materials having excellent thermal, mechanical, and electrochemical characteristics to accommodate a high operating temperature. To facilitate commercialization of SOFCs, it would be desirable to lower an operating temperature of the SOFC from the range of 800 to 1000 °C to a range of 500 to 700 °C to obtain longer-term stability and a more economical and more efficient system. When an operating temperature of the SOFC system is lowered, the activity of an electrode material, in particular, a cathode material, is substantially decreased.

Shao and Haile (Zongping Shao and Sossina M. Haile, A High-Performance Cathode for the Next Generation of Solid-Oxide Fuel Cells, 431 Nature 170-173(2004)) disclose that a Ba_{0.5}Sr_{0.5}Co_{0.8}Fe_{0.2}O_{3-δ} ("BSCF") cathode material shows excellent performance even at a low temperature of 600 °C or lower. The BSCF cathode material, which was once considered as an oxygen permeation membrane material, has a high concentration of oxygen vacancies and thus has high oxygen mobility. Although the BSCF cathode material shows excellent performance at a low temperature, like other cobalt-containing materials, the BSCF cathode material has a large thermal expansion coefficient ("TEC") of 19×10⁻⁶ to 20×10⁻⁶ per kelvin (K⁻¹, in air, 50 to 900 °C). The TEC characteristic may not match a TEC of other adjacent layers, and thus interlayer mismatch or a decrease in long-term operational stability may occur. Thus there remains a need for an improved SOFC material.

### SUMMARY OF THE INVENTION

Provided is a material for a solid oxide fuel cell including a first compound that has a perovskite crystal structure, a first ionic conductivity, a first electronic conductivity, and a first thermal expansion coefficient, and is represented by Formula 1, and a second compound having a perovskite crystal structure, a second ionic conductivity, a second electronic conductivity, and a second thermal expansion coefficient, wherein the first ionic conductivity is more than the second ionic conductivity, the first electronic conductivity is less than the second electronic conductivity, and the first thermal expansion coefficient is more than the second thermal expansion coefficient.

Provided is a cathode for a solid oxide fuel cell including the material for a solid oxide fuel cell.

Provided is a solid oxide fuel cell including the material for a solid oxide fuel cell.

Additional aspects will be set forth in part in the description which follows and, in part, will be apparent from the description.

According to an aspect, a material for a solid oxide fuel cell includes: a first compound having a perovskite crystal structure, a first ionic conductivity, a first electronic conductivity, and a first thermal expansion coefficient, wherein the first compound is represented by Formula 1; and a second compound having a perovskite crystal structure, a second ionic conductivity, a second electronic conductivity, and a second thermal expansion coefficient, wherein the first ionic conductivity is more than the second lower ionic conductivity, the first electronic conductivity is less than the second electronic conductivity, and the first thermal expansion coefficient is more than the second thermal expansion coefficient,

BaₐSr_{b}CoₓFe_{y}Z_{1-x-y}O_{3-δ}, Formula 1

wherein
Z is a transition metal element, a lanthanide element, or a combination thereof,
a and b satisfy 0.4 ≤ a ≤ 0.6 and 0.4 ≤ b ≤ 0.6, respectively,
x and y satisfy 0.6 ≤ x ≤ 0.9 and 0.1 ≤ y ≤ 0.4, respectively, and
δ is selected so that the first compound is electrically neutral.

At a temperature of about 500 to about 900 °C, the first compound may have an ionic conductivity of about 0.01 to about 0.03 siemens per centimeter (Scm⁻¹), an electronic conductivity of about 10 to about 100 Scm⁻¹, and a thermal expansion coefficient of about 16×10⁻⁶ to about 21×10⁻⁶ per kelvin (K⁻¹).

In a temperature range of about 500 to about 900 °C, the second compound may have an ionic conductivity of about 10⁻² to about 10⁻⁷ Scm⁻¹, an electronic conductivity of about 100 to about 1000 Scm⁻¹, and a thermal expansion coefficient of about 11×10⁻⁶ to about 17×10⁻⁶ K⁻¹.

In Formula 1, a and b may each be 0.5, and x and y may satisfy 0.75 ≤ x ≤ 0.85 and 0.1 ≤ y ≤ 0.15, respectively.

In Formula 1, a and b may each be 0.5, and x and y may be 0.8 and 0.1, respectively.

In Formula 1, a sum of x and y may satisfy 0.7 ≤ x+y ≤ 0.95.

In Formula 1, a sum of a and b may satisfy 0.9 ≤ a+b ≤ 1.

In Formula 1, the transition metal element may be manganese, zinc, nickel, titanium, niobium, copper, or a combination thereof.

In Formula 1, the lanthanide element may be holmium ("Ho"), ytterbium ("Yb"), erbium ("Er"), thulium ("Tm"), lutetium ("Lu"), or a combination thereof.

The first compound and the second compound each independently may have an average particle size of about 0.3 to about 3 micrometers (µm).

The second compound may be represented by Formula 2:

La_{c}Sr_{d}Co_{w}Fe_{z}O_{3-y} Formula 2

wherein
c and d satisfy 0.5 ≤ c ≤ 0.7 and 0.3 ≤ d ≤ 0.5, respectively,
w and z satisfy 0.1 ≤ w ≤ 0.3 and 0.7 ≤ z ≤ 0.9, respectively, and
γ is selected so that the second compound is electrically neutral.

In Formula 2, c and d may be 0.6 and 0.4, respectively, and w and z may be 0.2 and 0.8, respectively.

The second compound may be represented by Formula 3:

AₑSr_{f}Co_{q}MᵣO_{3-ζ}, Formula 3

wherein
A is lanthanum ("La"), samarium ("Sm"), praseodymium ("Pr"), or a combination thereof, M is iron ("Fe") manganese ("Mn"), or a combination thereof,
e and f satisfy 0.4 ≤ e ≤ 0.8 and 0.2 ≤ f ≤ 0.6, respectively,
q and r satisfy 0 ≤ q ≤ 0.9 and 0.1 ≤ r ≤ 1, respectively,
provided that when A and M are La and Fe, respectively, q = 0, and
ζ is selected so that the second compound is electrically neutral.

In Formula 3, A may be praseodymium ("Pr"), M may be iron ("Fe") or manganese, e and f may satisfy 0.4 ≤ e ≤ 0.8 and 0.2 ≤ f ≤ 0.6, respectively, and q and r may satisfy 0.2 ≤ q ≤ 0.8 and 0.2 ≤ r ≤ 0.8, respectively.

In Formula 3, A may be lanthanum ("La"), M may be iron ("Fe") or manganese ("Mn"), e and f may satisfy 0.4 ≤ e ≤ 0.8 and 0.2 ≤ f ≤ 0.6, respectively, q = 0, and r may satisfy 0.2 ≤ r ≤ 0.8.

In Formula 3, A may be lanthanum ("La"), M may be manganese ("Mn"), e and f may satisfy 0.4 ≤ e ≤ 0.8 and 0.2 ≤ f ≤ 0.6, respectively, q = 0, and r may satisfy 0.2 ≤ r ≤ 0.8.

In Formula 3, A may be praseodymium ("Pr"), M may be iron ("Fe"), or manganese (Mn), e and f may satisfy 0.5 ≤ e ≤ 0.8 and 0.2 ≤ f ≤ 0.5, respectively, q = 0, and r may satisfy 0.2 ≤ r ≤ 0.8.

A weight ratio of the second compound with respect to the first compound may be about 0.53 to about 1.00.

According to another aspect, a cathode for a solid oxide fuel cell includes the material described above.

The cathode may have a first layer including the material described above, and a second layer, wherein the second layer includes a lanthanide metal oxide having a perovskite crystal structure.

According to another embodiment of this disclosure, a solid oxide fuel cell includes: the cathode described above; an anode; and an electrolyte interposed between the cathode and the anode.

The solid oxide fuel cell may further include a first functional layer which is interposed between the cathode and the electrolyte and which is effective to prevent or suppress a reaction between the cathode and the electrolyte.

The first functional layer may include gadolinium-doped ceria ("GDC"), samarium-doped ceria ("SDC"), yttrium-doped ceria ("YDC"), or a combination thereof.

An operating temperature of the solid oxide fuel cell may be about 700 °C or less.

According to another embodiment of this disclosure, a solid oxide fuel cell includes: a cathode; an anode; an electrolyte interposed between the cathode and the anode; and a second functional layer interposed between the cathode and the electrolyte, wherein the second functional layer includes the material described above.

An operating temperature of the solid oxide fuel cell may be about 700 °C or less

Also disclosed is a material for a solid oxide fuel cell, the material including: a first compound having a perovskite crystal structure, a first ionic conductivity, a first electronic conductivity, and a first thermal expansion coefficient, wherein the first compound includes Ba, Sr, Co, Fe, Z, and O, wherein a mole fraction a of Ba is 0.4 ≤ a ≤ 0.6, a mole fraction b of Sr is 0.4 ≤ b ≤ 0.6, a mole fraction x of Co is 0.6 ≤ x ≤ 0.9, a mole fraction y of Fe is 0.1 ≤ y ≤ 0.4, a mole fraction of Z is (1-x-y), wherein Z is a metal of Groups 3 to 12, a lanthanide element, or a combination thereof, and a mole fraction δ of O is selected so that the first compound is electrically neutral; and a second compound having a perovskite crystal structure, a second ionic conductivity, a second electronic conductivity, and a second thermal expansion coefficient; wherein the first ionic conductivity is more than second ionic conductivity, the first electronic conductivity is less than the second electronic conductivity, and the first thermal expansion coefficient is more than the second thermal expansion coefficient

### BRIEF DESCRIPTION OF THE DRAWINGS

The above and other aspects, advantages and features of this disclosure will become more apparent by describing in further detail embodiments thereof with reference to the accompanying drawings in which:
FIG. 1 is a schematic cross-sectional view of an embodiment of a half cell including a material layer;
FIG. 2 is a schematic cross-sectional view of another embodiment of a half cell including a material layer;
FIG. 3 is a schematic cross-sectional view of test cells manufactured according to Examples 1 to 5 and Comparative Examples 1 to 3;
FIGS. 4A, 4B, and 4C show scanning electron micrographs ("SEMs") of a first compound before milling, the first compound after milling, and of a mixture of the first compound and a second compound after milling, respectively;
FIG. 5 is a graph of intensity (arbitrary units) versus scattering angle (degrees two theta and is an X-ray diffraction ("XRD") spectrum which shows that a first compound included in a material for a solid oxide fuel cell ("SOFC") according to an embodiment is present as a cubic crystalline phase;
FIG. 6 is a graph of intensity (arbitrary units) versus scattering angle (degrees two theta) and is an XRD spectrum which shows that a first compound included in a material for a SOFC according to an embodiment does not have a secondary phase;
FIGS. 7A and 7B are SEMs of a cross-section of a half of a test cell manufactured according to Example 3;
FIG. 8 is a graph of impedance (Z₂, ohms) versus resistance (Z₁, ohms) and is an impedance spectrum showing ionic resistance characteristics of test cells manufactured according to Examples 1 to 4 and Comparative Example 1; and
FIG. 9 is a graph of impedance (Z₂, ohms) versus resistance (Z₁, ohms) and is an impedance spectrum showing ionic resistance characteristics of test cells manufactured according to Example 5 and Comparative Examples 2 and 3.

### DETAILED DESCRIPTION OF THE EMBODIMENTS

This disclosure will be described more fully hereinafter with reference to the accompanying drawings, in which various embodiments are shown, wherein like reference numerals refer to like elements throughout. This disclosure may, however, be embodied in many different forms, and should not be construed as limited to the embodiments set forth herein. Rather, these embodiments are provided so that this disclosure will be thorough and complete, and will fully convey the scope of the invention to those skilled in the art.

The terminology used herein is for the purpose of describing particular embodiments only and is not intended to be limiting. As used here, the singular forms "a", "an", and "the", are intended to include the plural forms as well, unless the content clearly indicates otherwise. "Or" means "and/or." It will be further understood that the terms "comprises," and/or "comprising," or "includes," and/or "including" when used in this specification specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning consistent with their meaning in the context of the relevant art and the present disclosure, and will not be interpreted in an idealized or overly formal sense unless expressly so defined herein.

It will be understood that when an element is referred to as being "on" another element, it can be directly on the other element or intervening elements may be present there between. In contrast, when an element is referred to as being "directly on" another element, there are no intervening elements present. As used herein, the term "and/or" includes any and all combinations of one or more of the associated listed items.

It will be understood that, although the terms "first," "second," "third" etc. may be used herein to describe various elements, components, regions, layers and/or sections, these elements, components, regions, layers, and/or sections should not be limited by these terms. These terms are only used to distinguish one element, component, region, layer, or section from another element, component, region, layer, or section. Thus, "a first element," "component," "region," "layer", or "section" discussed below could be termed a second element, component, region, layer, or section without departing from the teachings herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

A transition metal element means an element of Groups 3 to 12 of the Periodic Table of the Elements.

The term 'a material for a solid oxide fuel cell' as used herein may refer to a 'cathode material for a solid oxide fuel cell' and/or 'a functional layer material for a solid oxide fuel cell', wherein the material or layer may comprise a mixture, slurry, and/or composite including the first compound and the second compound.

The term 'a functional layer material for a solid oxide fuel cell' refers to a layer that is interposed between an electrolyte layer and a cathode and prevents or suppresses a reaction there between.

The term 'composite' as used herein refers to a material that is prepared from two or more materials having different physical or chemical properties, wherein the two or more materials are distinguished from each other in a finished structure on a macroscopic or microscopic scale.

Materials used in SOFCs desirably provide an electrode material having a high catalytic activity. A material having a perovskite crystal structure can have excellent catalytic characteristics, ionic conductivity, and electronic conductivity, and may prevent a reduction in activity of an electrode material, for example when the operating temperature of a SOFC system is lowered. For example, the perovskite crystal structure material may be a mixed ionic electronic conductor ("MIEC").

Materials used in SOFCs are also preferred to have particular characteristics. For example, a cathode material should have a high chemical affinity to an adjacent material as well as a high chemical activity. Preferably, a cathode material has a high oxygen reduction activity, high electronic conductivity, and high ionic conductivity. If the electronic conductivity of the cathode material is low, the migration of electrons needed for an anode reaction (for example, O²⁻ + H₂ → H₂O + 2e⁻) may be impaired and thus the efficiency of this electrochemical reaction may be decreased. If the ionic conductivity of the cathode material is low, the migration of oxygen ions generated through a cathode reaction (that is, 1/2O₂ + 2e⁻ → O²⁻) is restricted and thus there may not be enough active sites where reduction of oxygen occurs. As described above, when the reduction of oxygen is restricted and an over-voltage increases, a voltage drop may occur when the SOFC system is operated, leading to a decrease in performance.

According to an embodiment, a material for a solid oxide fuel cell will now be described in further detail. According to an embodiment, the material for a solid oxide fuel cell includes a first compound that has a perovskite crystal structure, a first ionic conductivity, a first electronic conductivity, and a first thermal expansion coefficient, wherein the first compound is represented by Formula 1 below; and a second compound having a perovskite crystal structure, a second ionic conductivity, a second electronic conductivity, and a second thermal expansion coefficient, wherein the first ionic conductivity is more than the second ionic conductivity, the first electronic conductivity is less than the second electronic conductivity, and the first thermal expansion coefficient is more than the second thermal expansion coefficient.

BaₐSr_{b}COₓFe_{y}Z_{1-x-y}O_{3-δ}, Formula 1

wherein,
Z is a transition metal element, a lanthanide element, or a combination thereof,
a and b satisfy 0.4 ≤ a ≤ 0.6 and 0.4 ≤ b ≤ 0.6, respectively,
x and y satisfy 0.6 ≤ x ≤ 0.9 and 0.1 ≤ y ≤ 0.4, respectively, and
δ is selected so that the first compound is electrically neutral.

According to an embodiment, a may satisfy 0.45 ≤ a ≤ 0.55, specifically 0.48 ≤ a ≤ 0.52, and b may satisfy 0.45 ≤ b ≤ 0.55, specifically 0.48 ≤ b ≤ 0.52.

According to an embodiment, x may satisfy 0.65 ≤ x ≤ 0.85, specifically 0.7 ≤ x ≤ 0.8, and y may satisfy 0.1 ≤ y ≤ 0.35, specifically 0.1 ≤ y ≤ 0.3. According to another embodiment, x and y may be 0.75 ≤ x ≤ 0.85 and 0.1 ≤ y ≤ 0.15, respectively.

The first compound, at a temperature of about 500 to about 900 °C, may have an ionic conductivity of about 0.01 to about 0.03 siemens per centimeter (Scm⁻¹), an electronic conductivity of about 10 to about 100 Scm⁻¹, and a thermal expansion coefficient of about 16×10⁻⁶ to about 21×10⁻⁶ per kelvin (K⁻¹). As is further described above, although the first compound has high ionic conductivity and a high thermal expansion coefficient, the electronic conductivity and the melting point of the first compound are low. Also, at a temperature of about 850 to about 900 °C, the first compound experiences a cubic to hexagonal phase transition (cubic → hexagonal). Accordingly, when a solid oxide fuel cell including only the first compound is operated for a long period of time, the durability of the solid oxide fuel cell may be insufficient.

The second compound, at a temperature of about 500 to about 900 °C, may have an ionic conductivity of about 10⁻² to about 10⁻⁷ Scm⁻¹, an electronic conductivity of about 100 to about 1000 Scm⁻¹, and a thermal expansion coefficient of about 11×10⁻⁶ to about 17×10⁻⁶ K⁻¹. As is further described above, although the second compound has low ionic conductivity, and a low thermal expansion coefficient, the electronic conductivity is high.

Accordingly, the material for a solid oxide fuel cell including the first compound and the second compound has high ionic conductivity and high electronic conductivity, a low thermal expansion coefficient, and at a temperature of about 850 to about 900 °C does not experience a phase transition, as disclosed below in further detail.

According to an embodiment of this disclosure, the first compound represented by Formula 1 may include a compound of Formula 1 in which one or more of the following conditions is met for the variables δ, a, b, x, y, and Z.
δ may be in a range of 0.1 ≤ 6 ≤ 0.4, specifically 0.15 ≤ 6 ≤ 0.35, more specifically 0.2 ≤ 6 ≤ 0.3.

In Formula 1, a and b may each be 0.5, and x and y may satisfy 0.75 ≤ x ≤ 0.85 and 0.1 ≤ y ≤ 0.15, respectively.

In Formula 1, a and b may each be 0.5, and x and y may be 0.8 and 0.1, respectively.

In Formula 1, a sum of x and y may satisfy 0.7 ≤ x+y ≤ 0.95, specifically 0.75 ≤ x+y ≤ 0.93, more specifically 0.8 ≤ x+y ≤ 0.9.

In Formula 1, a sum of a and b may satisfy 0.9 ≤ a+b ≤ 1, specifically 0.92 ≤ a+b ≤ 1, more specifically 0.95 ≤ a+b ≤ 1.

The transition metal element may be manganese, zinc, nickel, titanium, niobium, copper, or a combination thereof. An embodiment where the transition metal element is manganese, zinc, nickel, titanium, niobium, or copper is specifically mentioned. According to an embodiment, the transition metal element is zinc.

In Formula 1, the lanthanide element is an element having an atomic number of 57 to 71, and may be holmium ("Ho"), ytterbium ("Yb"), erbium ("Er"), thulium ("Tm"), lutetium ("Lu"), or a combination thereof. An embodiment where the lanthanide element is holmium, ytterbium, erbium, thulium, or lutetium is specifically mentioned.

The first compound and the second compound may each independently have an average particle size of about 0.3 to about 3 micrometers (µm), specifically about 0.4 to about 2.5 µm, more specifically about 0.6 to about 2 µm. Without being bound by theory, since the first compound and the second compound have different average particle sizes, growth of the respective particles of the material for a solid oxide fuel cell is suppressed and thus ionic conductivity of the material is improved even at an operating temperature of a solid oxide fuel cell.

According to another embodiment of this disclosure, a material for a solid oxide fuel cell includes a first compound that has a perovskite crystal structure, a first ionic conductivity, a first electronic conductivity, and a first thermal expansion coefficient, wherein the first compound comprises Ba, Sr, Co, Fe, Z, and O, wherein a mole fraction a of Ba is 0.4 ≤ a ≤ 0.6, a mole fraction b of Sr is 0.4 ≤ b ≤ 0.6, a mole fraction x of Co is 0.6 ≤ x ≤ 0.9, a mole fraction y of Fe is 0.1 ≤ y ≤ 0.4, a mole fraction of Z is (1-x-y), wherein Z is a metal of Groups 3 to 12, a lanthanide element, or a combination thereof, and a mole fraction δ of O is selected so that the first compound is electrically neutral; and a second compound having a perovskite crystal structure, a second ionic conductivity, a second electronic conductivity, and a second thermal expansion coefficient, wherein the first ionic conductivity is more than the second ionic conductivity, the first electronic conductivity is less than the second electronic conductivity, and the first thermal expansion coefficient is more than the second thermal expansion coefficient.

The second compound may be represented by Formula 2 below:

La_{c}Sr_{d}Co_{w}Fe_{z}O_{3-γ}, Formula 2

wherein
c and d satisfy 0.5 ≤ c ≤ 0.7 and 0.3 ≤ d ≤ 0.5, respectively,
w and z satisfy 0.1 ≤ w ≤ 0.3 and 0.7 ≤ z ≤ 0.9, respectively, and
γ is selected so that the second compound is electrically neutral.

According to an embodiment, c may satisfy 0.55 ≤ c ≤ 0.65, specifically 0.58 ≤ c ≤ 0.62, and d may satisfy 0.35 ≤ d ≤ 0.45, specifically 0.38 ≤ d ≤ 0.42.

According to an embodiment, w may satisfy 0.15 ≤ w ≤ 0.25, specifically 0.18 ≤ w ≤ 0.22, and z may satisfy 0.75 ≤ z ≤ 0.85, specifically 0.78 ≤ z ≤ 0.82.

According to an embodiment of this disclosure, the second compound represented by Formula 2, may include a compound of Formula 2 in which one or more of the following conditions is met for the variables c, d, w, z, and γ.

In Formula 2, c and d may be 0.6 and 0.4, respectively, and w and z may be 0.2 and 0.8, respectively.
γ may be selected according to oxidation states of the components constituting the second compound represented by Formula 2.

An embodiment wherein γ may be 0 is specifically mentioned.

According to an embodiment the second compound may comprise La, Sr, Co, Fe, and O, wherein a mole fraction c of La is 0.5 ≤ c ≤ 0.7, a mole fraction d of Sr is 0.3 ≤ d ≤ 0.5, a mole fraction w of Co is 0.1 ≤ w ≤ 0.3, a mole fraction z of Fe is 0.7 ≤ z ≤ 0.9, and a mole fraction γ of O is selected so that the second compound is electrically neutral.

If the ionic conductivity, electronic conductivity, and thermal expansion coefficient of the second compound are within the ranges described above, the second compound may compensate for the low electronic conductivity and large thermal expansion coefficient of the first compound without offsetting the high ionic conductivity effect of the first compound.

δ of Formula 1 and γ of Formula 2 may each differ according to oxidation states of constituting components of the first and second compounds represented by Formula 1 and Formula 2 above. According to an embodiment, in Formula 1, when an oxidation state of each of Ba, Sr, Co, and Z is +2, and an oxidation state of Fe is +3, δ is '2-(a+b)-(y/2)'. According to another embodiment, in Formula 2, when an oxidation state of each of La and Fe is +3, and an oxidation state of each of Sr and Co is +2, γ may be '3-(3c/2)-d-w-(3z/2)'.

The second compound may be represented by Formula 3 below:

AₑSr_{f}Co_{q}MᵣO_{3-ζ}, Formula 3

wherein
A is lanthanum ("La"), samarium ("Sm"), praseodymium ("Pr"), or a combination thereof, M is iron ("Fe"), manganese ("Mn"), or a combination thereof,
e and f satisfy 0.4 ≤ e ≤ 0.8 and 0.2 ≤ f ≤ 0.6, respectively,
q and r satisfy 0 ≤ q ≤ 0.9 and 0.1 ≤ r ≤ 1, respectively,
provided that when A and M are La and Fe, respectively, q = 0, and ζ is selected so that the second compound is electrically neutral.

According to an embodiment, e may satisfy 0.55 ≤ e ≤ 0.75, specifically 0.6 ≤ e ≤ 0.7, and f may satisfy 0.25 ≤ f ≤ 0.45, specifically 0.3 ≤ f ≤ 0.4.

According to an embodiment, q may satisfy 0.25 ≤ q ≤ 0.75, specifically 0.3 ≤ q ≤ 0.6, and r may satisfy 0.25 ≤ r ≤ 0.75, specifically 0.3 ≤ r ≤ 0.7, more specifically 0.35 ≤ r ≤ 0.6.

According to an embodiment of this disclosure, the second compound represented by Formula 3 may include a compound of Formula 3 in which one or more of the following conditions is met for the variables A, M, e, f, q, and r.

In Formula 3, A may be Pr, M may be Fe, e and f may satisfy 0.4 ≤ e ≤ 0.8 and 0.2 ≤ f ≤ 0.6, respectively, and q and r may satisfy 0.2 ≤ q ≤ 0.8 and 0.2 ≤ r ≤ 0.8, respectively.

In Formula 3, A may be La, M may be Fe or Mn, e and f may satisfy 0.4 ≤ e ≤ 0.8 and 0.2 ≤ f ≤ 0.6, respectively, q = 0, and r may satisfy 0.2 ≤ r ≤ 0.8.

In Formula 3, A may be Pr, M may be Fe, e and f may satisfy 0.5 ≤ e ≤ 0.8 and 0.2 ≤ f ≤ 0.5, respectively, q = 0, and r may satisfy 0.2 ≤ r ≤ 0.8.

According to an embodiment the second compound may comprise A, Sr, Co, M, and O, wherein a mole fraction e of A is 0.4 ≤ e ≤ 0.8, wherein A is lanthanum, samarium, praseodymium, or a combination thereof, a mole fraction f of Sr is 0.2 ≤ f ≤ 0.6, a mole fraction q of Co is 0 ≤ q ≤ 0.9, a mole fraction r of M is 0.1 ≤ z ≤ 1, wherein M is iron, manganese, or a combination thereof, provided that when A and M are lanthanum and iron, respectively, q = 0, and a mole fraction of O is selected so that the second compound is electrically neutral.

A weight ratio of the second compound with respect to the first compound may be about 0.53 to about 1.00, specifically about 0.6 to about 0.9, more specifically about 0.7 to about 0.8. If the weight ratio of the second compound with respect to the first compound is within the foregoing range, the material for a solid oxide fuel cell may have excellent or improved electronic conductivity and ionic conductivity, and a low thermal expansion coefficient.

Hereinafter, a method of preparing the material for a solid oxide fuel cell will be disclosed in further detail.

First, a method of preparing the first compound will be disclosed in further detail.

According to an embodiment, the method of preparing the first compound includes wet-mixing a metal precursor of each metal, which may include a transition metal element and/or a lanthanide element, in an amount corresponding to the composition of Formula 1, with a solvent, performing a first heat-treating on the wet mixture to obtain a gelled product, and performing a second heat-treating on the gelled product. According to another embodiment, the first heat-treating may be performed concurrently with the wet-mixing.

The metal precursor of each metal, including the transition metal element and/or the lanthanide element may be a nitrate, oxide, or halide of the transition metal element or the lanthanide element, or a combination thereof.

The solvent used in the wet-mixing may include water, and the solvent is not limited thereto.

In the wet-mixing, a precipitation agent may be added. The precipitation agent may include urea, polyvinyl alcohol ("PVA"), polyvinylpyrrolidone ("PVP"), cellulose, or a combination thereof. According to an embodiment, the precipitation agent may be a combination of urea and PVA. According to another embodiment, the precipitation agent may be a combination of urea and PVP.

The wet-mixing may be performed by stirring at a temperature of about 50 to about 700 °C, specifically about 75 to about 500 °C, and more specifically 100 to about 300 °C for a selected period of time, e.g. about 1 to about 5 hours, specifically about 1.5 to about 4.5 hours, more specifically about 2 to about 4 hours. If the wet-mixing temperature is within the range described above, components other than the solvent in the wet mixture may dissolve well in the solvent.

The first heat treatment may be performed at a temperature of about 150 to about 500 °C, specifically about 175 to about 450 °C, more specifically about 200 to about 400 °C for about 1 to about 10 hours, specifically about 2 to about 8 hours, more specifically about 3 to about 5 hours. If the first heat treatment temperature and the first heat treatment time are respectively within the range described above, a gelled product may be easily obtained.

Also, the method of preparing the material for a solid oxide fuel cell may further include drying the gelled product obtained from the first heat treatment. The drying may be performed at a temperature that is sufficient to remove the solvent (for example a temperature of about 20 to about 200 °C, specifically about 40 to about 150 °C, more specifically about 100 °C) and for a time that is sufficient to remove the solvent (for example a time of about 1 to about 100 hours, specifically about 2 to about 50 hours, more specifically about 24 hours).

The second heat treatment is performed by sintering the gelled product formed from the first heat treatment in a crucible at a temperature of about 600 to about 1500 °C, specifically about 800 to about 1300 °C, more specifically about 900 to about 1200 °C for about 1 to about 10 hours, specifically about 1 to about 8 hours, more specifically about 1 to about 6 hours, to obtain a product, which may be in the form of a powder. According to an embodiment, the product may be milled into a micro powder having a selected particle size, e.g. an average largest particle size of about 10 to about 1000 nanometers (nm), specifically about 100 to about 800 nm, more specifically about 150 to about 500 nm, after combining with a solvent. The solvent may be an alcohol, e.g. ethanol. The product may include the first compound represented by Formula 1. If the second heat treatment temperature and the second heat treatment time are respectively within the ranges described above, the first compound may have a large specific surface area without the occurrence of over-sintering.

According to an embodiment, the second compound may be prepared according to the method of preparing the first compound, as described above.

As described above, a starting material (that is, the metal precursor of each metal, including the transition metal element and/or the lanthanide element) is combined with a precipitation agent to form a mixture, and then a first heat treatment is performed on the mixture to form a gelled product. According to an embodiment, the gelled product may be a composite. A second heat treatment is performed on the gelled product, oxidizing the gelled product to form a material for a solid oxide fuel cell having a perovskite crystal structure. The material for a solid oxide fuel cell may include the first compound represented by Formula 1 and the second compound represented by Formula 2 or Formula 3. According to an embodiment, the material for a solid oxide fuel cell may be a cathode material for a solid oxide fuel cell.

A metal precursor material used in producing a commercially available barium-strontium-cobalt-iron ("BSCF")-containing material for a solid oxide fuel cell has high element volatility. Thus, it is difficult to obtain a BSCF having a uniform particle size. However, as is further disclosed above, if a precipitation agent is used, the inventors have found that when a gelation speed and a sintering speed of a wet mixture including the metal precursor material are appropriately selected a material for a solid oxide fuel cell having a uniform average particle size of 100 nanometers (nm) or less is obtained.

A microscopic structure, such as a pore size, morphology, and porosity, of a cathode may significantly affect the performance of a cathode. Accordingly, a cathode material obtained using the method described above has a small average particle size and a uniform particle size. Thus, when the porosity and specific surface area of the cathode material are high, the concentration of active sites that contribute to the reduction reaction (i.e., reduction of oxygen) is also high in the cathode material.

The method of preparing the material for a solid oxide fuel cell may further include combining the first compound and the second compound represented by Formula 2 at a selected molar ratio of the first compound to the second compound, e.g., about 8:2, 7:3, 6:4, or 5:5. The combining may be performed by mixing the first compound and the second compound manually and then ball milling the mixture for about 1 to about 30 hours, specifically about 12 to about 24 hours, more specifically about 10 to about 20 hours.

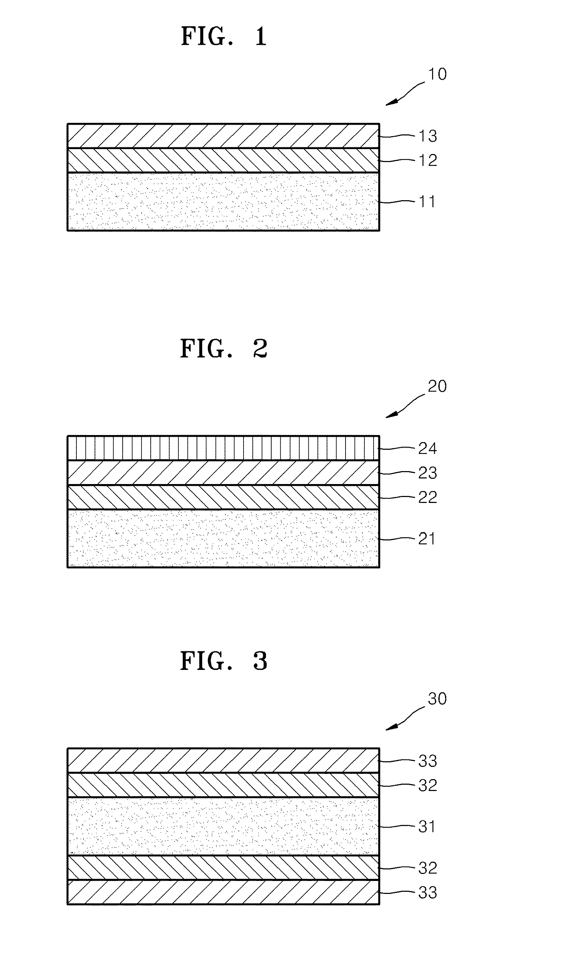

Then, an organic vehicle is added to the mixture including the first compound and the second compound to prepare a slurry, and the slurry may be coated on an electrolyte layer (e.g., electrolyte layer 11 in FIG. 1) or a first functional layer (e.g., first functional layer 12 in FIG. 1), which will be further disclosed below, and then a third heat treatment may be performed thereon. The organic vehicle may provide improved workability to the slurry, facilitating the formation of a coating by for example, screen printing or a dipping process of the slurry. The organic vehicle may include a resin, a solvent, or a combination thereof. The resin may function as a temporary binding agent allowing the slurry to retain a film shape after the coating of the slurry and before the third heat treatment, and the solvent may affect the viscosity and/or the printability of the slurry. The resin may include PVA, PVP, cellulose, or a combination thereof. The solvent may include ethylene glycol, alpha-terpineol, or a combination thereof. According to an embodiment, the slurry may be dried after coating. The drying may be performed at a temperature of about 50 to about 250 °C, specifically about 60 to about 200 °C, more specifically about 75 to about 150 °C, for about 1 to about 5 hours.

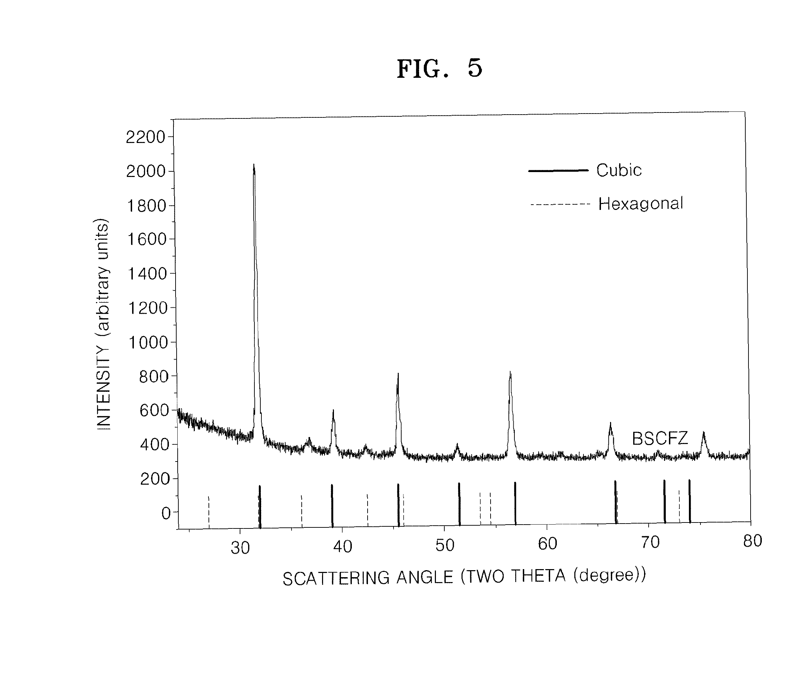

The third heat treatment may be performed at a temperature of about 600 to about 1500 °C, specifically about 800 to about 1300 °C, more specifically about 900 to about 1200 °C for about 1 to about 10 hours, specifically about 2 to about 8 hours, more specifically about 3 to about 5 hours. If the third heat treatment temperature and the third heat treatment time are respectively within the ranges described above, a material having an excellent or improved adhesive property with respect to a substrate (e.g., an electrolyte layer or a first functional layer) may be obtained, while a secondary phase (for example, a hexagonal crystalline phase) is not formed in the material. The formed material has a cubic crystalline phase that is more stable than a hexagonal crystalline phase (see FIG. 5).

Hereinafter, a cathode for a solid oxide fuel cell including the cathode material described above, and a solid oxide fuel cell including the cathode, an anode, and an electrolyte interposed between the cathode and the anode, will be disclosed in further detail.

According to an embodiment, the solid oxide fuel cell may further include a first functional layer which is interposed between the cathode and the electrolyte, and which may be effective to prevent or suppress a reaction between the cathode and the electrolyte.

FIG. 1 is a schematic cross-sectional view of an embodiment of a half cell 10 including a cathode material layer 13.

The half cell 10 includes an electrolyte layer 11, a first functional layer 12, and the cathode material layer 13.

The electrolyte layer 11 may include scandia stabilized zirconia ("ScSZ"), yttria stabilized zirconia ("YSZ"), samarium-doped ceria ("SDC"), gadolinium-doped ceria ("GDC"), or a combination thereof. An embodiment where the electrolyte layer may include ScSZ, YSZ, SDC, or GDC, is specifically mentioned. According to an embodiment, the electrolyte layer may be ScSZ. Since the electrolyte layer 11 desirably has a high density, the electrolyte layer 11 may be formed by sintering an electrolyte (e.g., ScSZ, YSZ, SDC, GDC, or a combination thereof) at a high temperature for a selected period of time. According to an embodiment, the sintering may be performed by heat-treating at a temperature of about 1,450 to about 1,650 °C, specifically about 1500 to about 1600 °C for about 6 to about 10 hours, specifically about 7 to about 9 hours.

The first functional layer 12 is selected to substantially prevent or effectively suppress a reaction between the electrolyte layer 11 and the cathode material layer 13 so that the formation of a non-conductive layer (not shown) between the electrolyte layer 11 and the cathode material layer 13 may be substantially prevented or effectively suppressed. The first functional layer 12 may include gadolinium-doped ceria ("GDC"), samarium-doped ceria ("SDC"), yttrium-doped ceria ("YDC"), or a combination thereof. The first functional layer 12 may have a dense structure and may function as a buffer layer. Formation conditions for the first functional layer 12 may significantly affect the performance of a cathode. For example, to prevent diffusion of an element between layers and to minimize interlayer mismatch due to thermal expansion of layers, the first functional layer 12 may be formed by sintering a first functional layer forming slurry at a temperature of about 1,350 to about 1,450 °C for about 3 to about 6 hours. According to an embodiment, a thickness of a layer of the first functional layer forming slurry, which is coated on a substrate (for example, electrolyte layer 11 in FIG. 1), may be about 15 micrometers ("µm") to about 25 µm. The first functional layer forming slurry may be a mixture including a functional material comprising GDC, SDC, YDC, or a combination thereof and the organic vehicle.

The cathode material layer 13 includes the first compound and the second compound. According to an embodiment, the cathode material layer 13 constitutes a cathode.

According to an embodiment, the solid oxide fuel cell may be operated at a temperature of about 700 °C or less.

A solid oxide fuel cell (not shown) including the half cell 10 having the structure described above and an anode (not shown) may have excellent or improved cell performance, high thermal stability, and excellent or improved durability due to characteristics of the material present in the cathode material layer 13, e.g., high ionic conductivity, high electronic conductivity, and a small thermal expansion coefficient.

FIG. 2 is a schematic cross-sectional view of an embodiment of a half cell 20 including a cathode material layer 23.

The half cell 20 includes an electrolyte layer 21, a first functional layer 22, the cathode material layer 23, and an additional layer 24. According to an embodiment, the cathode material layer 23 and the additional layer 24 constitute a cathode. However, the disclosed embodiment is not limited thereto, and a half cell and a solid oxide fuel cell according to another embodiment may have a cathode having a multiple-layer structure of various structures, e.g. a cathode having a plurality of layers.

According to an embodiment, the cathode may include a first layer including the material for a solid oxide fuel cell, and a second layer including a lanthanide metal oxide having a perovskite crystal structure.

The structure and function of the electrolyte layer 21, the first functional layer 22, and the cathode material layer 23 may be substantially identical to that of the electrolyte layer 11, the first functional layer 12, and the cathode material layer 13 described above, respectively.

The additional layer 24 may include a lanthanide metal oxide having a perovskite crystal structure. Also, the lanthanide metal oxide included in the additional layer 24 may be substantially identical to the second compound included in the cathode material layer 23.

The anode may include a cermet combined with a material for forming the electrolyte layers 11 or 21 and a nickel oxide, where the foregoing may be combined when in a form of a powder. Also, the anode may further include activated carbon.

A solid oxide fuel cell according to another embodiment includes, although not illustrated in the drawings, a cathode, an anode, an electrolyte interposed between the cathode and the anode, and a second functional layer interposed between the cathode and the electrolyte, including the material for a solid oxide fuel cell. The second functional layer may be interposed between the electrolyte and the cathode to substantially prevent or effectively suppress a reaction therebetween. According to an embodiment, the cathode includes a metal oxide having a perovskite crystal structure, such as the second compound, and/or a barium-containing metal oxide having a perovskite crystal structure, such as BSCF, but does not include the first compound represented by Formula 1.

Due to the inclusion of a material for a solid oxide fuel cell that retains low temperature resistance characteristics and has an improved thermal expansion coefficient, a solid oxide fuel cell according to an embodiment may be operated at a temperature of 700 °C or less, for example, from about 550 to about 650 °C.

Hereafter, an embodiment will be described in further detail with reference to the following examples and comparative examples. However, the following examples and comparative examples are for illustrative purpose only and are not intended to limit the scope of the one or more embodiments.

### Examples

### Examples 1 to 4

A test cell 30 as illustrated schematically in FIG. 3, was manufactured. The test cell 30 includes an electrolyte layer 31, a pair of first functional layers 32, and a pair of cathode material layers 33.

### Manufacture of Electrolyte Layer 31

As a material for the electrolyte layer 31, scandia-stabilized zirconia ("ScSZ") of the formula Zr_{0.8}Sc_{0.2}O_{2-ζ}, wherein is selected so that a zirconium-containing metal oxide represented by this formula is electrically neutral, (FCM Company, USA) was used. 1.5 grams (g) of ScSZ was loaded into a mold having a diameter of 1 centimeter (cm) and uniaxial pressing was performed thereon at a pressure of about 200 megaPascals (MPa). Then, an electrolyte layer was manufactured by sintering at a temperature of 1550 °C for 8 hours to form the electrolyte layer 31 in a pellet shape.

### Manufacture of First Functional Layer 32

As a material for the first functional layer 32, gadolinium-doped ceria ("GDC") of the formula Ce_{0.9}Gd_{0.1}O_{2-η}, wherein η is selected so that a ceria-containing metal oxide represented by this formula is electrically neutral, (FCM, USA) was used. GDC and an organic vehicle (ink vehicle, VEH, FCM, USA) were uniformly mixed at a weight ratio of 3:2 (GDC: organic vehicle) to provide a slurry, and then the slurry was screen printed on opposite surfaces of the electrolyte layer 31 by using a 40 micrometer (µm) screen. Then, the screen printed electrolyte was sintered at a temperature of 1400 °C for 5 hours, to provide the first functional layers 32.

### Manufacture of Cathode Material Layer 33

The cathode material layer 33 was manufactured using the following method.

### (1) Preparation of a first compound

Ba(NO₃)₂, Sr(NO₃)₂, Co(NO₃)₂, Fe(NO₃)₃, Zn(NO₃)₂, and urea were quantified at a molar ratio of 0.5:0.5:0.8:0.1:0.1:3.5. Then, polyvinyl alcohol ("PVA") was quantified to have the same mass as that of the urea. Then, 1063.1 grams (g) of a total of the quantified materials was added to a 50 liter (L) reactor for liquid phase materials equipped with an agitator. Then, 10 L of deionized water was added to the reactor. Then, the materials contained in the reactor were heated to 200 °C while stirring and at this temperature the materials were left for 3 hours to provide a gelled product. Subsequently, the gelled product was placed in an aluminum crucible and then dried in an oven at a temperature of 100 °C for 24 hours. Then, the dried materials were transferred to a calcining furnace and sintered at a temperature of 1000 °C for 5 hours. Then, the sintered material was milled in a mortar to provide a first compound of the formula Ba_{0.5}Sr_{0.5}Co_{0.8}Fe_{0.1}Zn_{0.1}O_{3-δ}, wherein δ is selected so that a metal oxide represented by this formula is electrically neutral.

### (2) Preparation of a cathode material forming slurry

The first compound prepared according to the above method and a second compound of formula, La_{0.6}Sr_{0.4}Co_{0.2}Fe_{0.5}O_{3-γ} wherein γ is selected so that the second compound is electrically neutral, were mixed at molar ratios shown in Table 1 below and then ball milled for 10 hours. Subsequently, the mixed powder and an organic vehicle (ink vehicle, VEH, FCM, USA) were uniformly mixed at a weight ratio of 2:3 (mixed powder: organic vehicle) to provide a cathode material forming slurry.

**Table 1**

| | Example 1 | Example 2 | Example 3 | Example 4 |
|---|---|---|---|---|
| First compound: second compound (molar ratio) | 8:2 | 7:3 | 6:4 | 5:5 |

### (3) Coating and heat treatment of a cathode material forming slurry

The cathode material forming slurry prepared above was screen printed on a surface of each of the pair of first functional layers 32 by using a 40 µm screen. Subsequently, the screen printed functional layers were dried in an oven at a temperature of 100 °C and then sintered in a calcining furnace at a temperature of 900 °C for 2 hours to provide cathode material layers 33 on a surface of each of the pair of first functional layers 32.

### Comparative Example 1

A test cell 30 was manufactured in the same manner as in Examples 1 to 4, except that only the first compound was used, instead of the mixture including the first compound and the second compound, so as to form the cathode material layers 33.

### Example 5

A test cell 30 was manufactured in the same manner as in Examples 1 to 4, except that to form the cathode material layers 33, each of the first compounds prepared according to Examples 1 to 4 was mixed with ethanol and then milled at a rate of 2000 revolutions per minute ("RPM") for 24 hours using a planetary ball mill, and then the milled first compounds were mixed with the second compound.

### Comparative Example 2

A test cell 30 was manufactured in the same manner as in Examples 1 to 4, except that only the first compound was used, instead of the mixture including the first compound and the second compound, so as to form the cathode material layers 33. Also, the first compound used in this experiment was prepared by mixing each of the first compounds prepared according to Examples 1 to 4 with ethanol and then milling the mixture at a rate of 2000 rpm for 24 hours using a planetary ball mill.

### Comparative Example 3

A test cell 30 was manufactured in the same manner as in Examples 1 to 4, except that to form the cathode material layers 33, a mixture including BSCF and a second compound was used, instead of the mixture including the first compound and the second compound. BSCF can be represented by the formula, Ba_{0.5}Sr_{0.5}Co_{0.8}Fe_{0.2}O_{3-ε}, wherein ε is selected so that BSCF represented by this formula is electrically neutral. The BSCF was additionally mixed with ethanol and milled at a rate of 2000 rpm for 24 hours using a planetary ball mill.

### Evaluation Example

### Evaluation Example 1: Scanning Electron Microscope evaluation test of cathode material

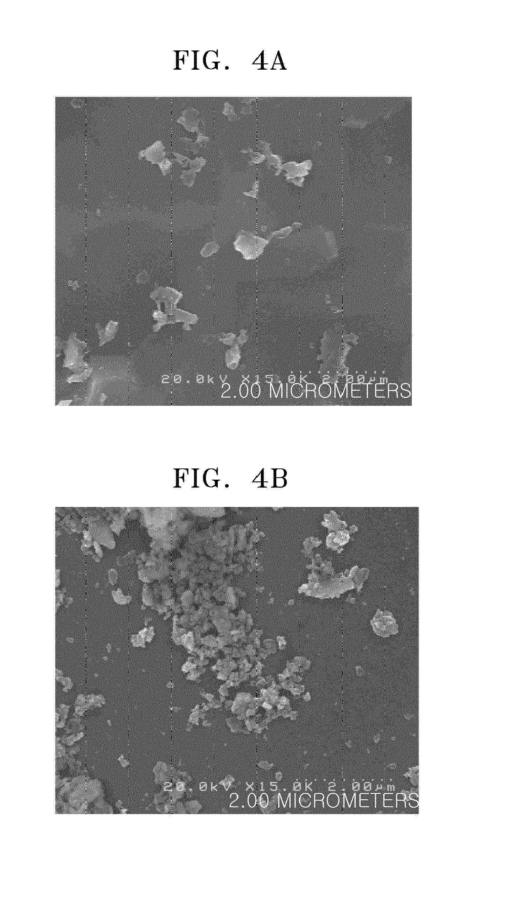

FIGS. 4A to 4C show a scanning electron micrographs ("SEMs") of the first compounds prepared according to Examples 1 to 4 (the first compounds at this stage will be referred to as first compounds before milling), a SEM of first compounds when the first compounds before milling were mixed with ethanol and then milled at a rate of 2000 rpm for 24 hours using a planetary ball mill (first compounds at this stage will be referred to as first compounds after milling), and an SEM of mechanical mixtures including the first compounds after milling and the second compound used in Examples 1 to 4, respectively.

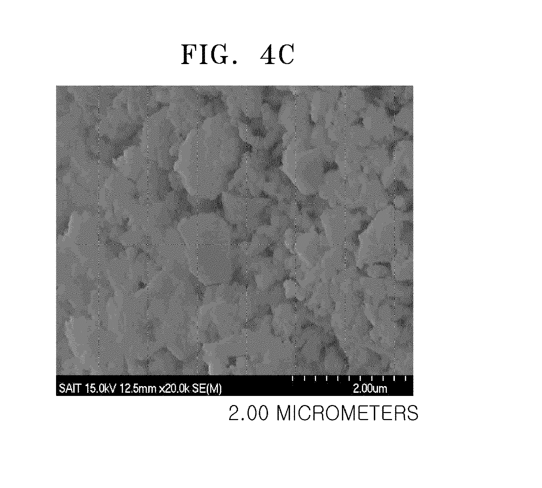

Referring to FIG. 4A, before the milling, the first compounds have a particle size of about 1 micrometer (µm). Referring to FIG. 4B, after the milling, the first compounds have a particle size of about 200 to about 300 nm. Referring to FIG. 4C, the first compound has a relatively small particle size and the second compound has a relatively large particle size, and the first and second compounds are homogeneously mixed.

### Evaluation Example 2: Crystal phase analysis of first compound

The first compounds prepared according to Examples 1 to 4 were analyzed by X-ray diffraction ("XRD") (Philips x'pert pro; Cu-K_{α} radiation; 20 - 80 degrees two theta, ("°2θ")), and results thereof are shown in FIG. 5. In FIG. 5, 'Cubic' and 'Hexagonal' refer to reference peaks representing a cubic crystalline phase and a hexagonal crystalline phase, respectively.

Referring to FIG. 5, the peaks corresponding to the first compounds prepared according to Examples 1 to 4 match those of the 'Cubic' reference peaks, confirming that the first compounds each had a cubic crystalline phase. A metal oxide having a perovskite crystal structure is known to be more stable when it is present in a cubic crystalline phase than in a hexagonal crystalline phase. Accordingly, while not being bound to theory, it is understood that a solid oxide fuel cell including the first compound would have excellent or improved durability when operated for a long period of time.

### Evaluation Example 3: Crystal phase analysis of mixture including first compound and second compound

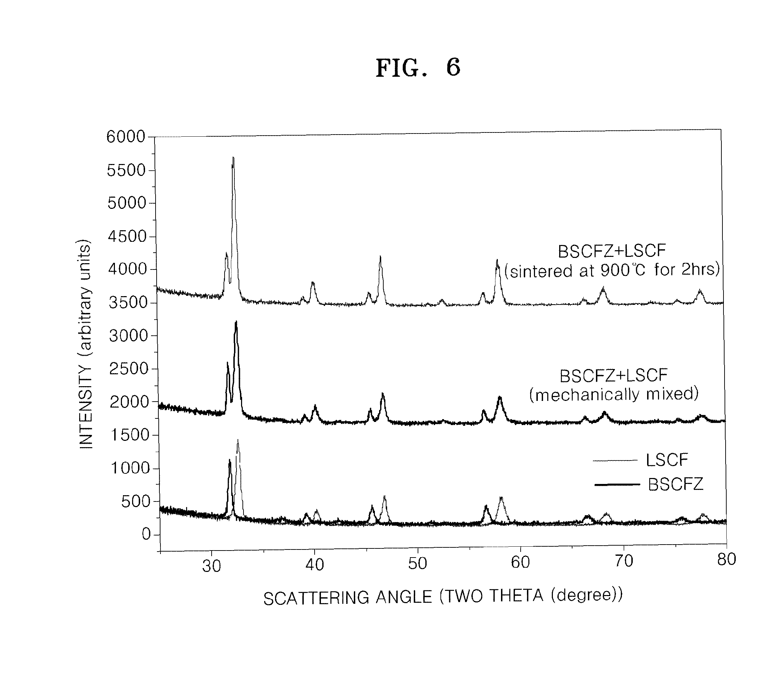

The first compounds prepared according to Examples 1 to 4 and the second compounds used in Examples 1 to 4 were mechanically mixed and the mixtures were analyzed before and after sintering at 900 °C, for about 2 hours by XRD (Philips x'pert pro; Cu-K_{α} radiation; 20 - 80 °2θ), and results thereof are shown in FIG. 6. Also, the first compound and the second compound, not being mixed, were analyzed by XRD, and results thereof are additionally shown in a bottom part of FIG. 6.

Referring to FIG. 6, an XRD spectrum of the mixture including the first compound and the second compound before sintering is the same as an XRD spectrum of the mixture including the first compound and the second compound after sintering. From this result, it was confirmed that a secondary phase was not formed during sintering. Typically, when a composite is formed using two or more materials, if a secondary phase is formed during sintering, advantages of the materials are offset. However, this offsetting does not occur with respect to the cathode material layer 33.

### Evaluation Example 4: SEM test of test cell

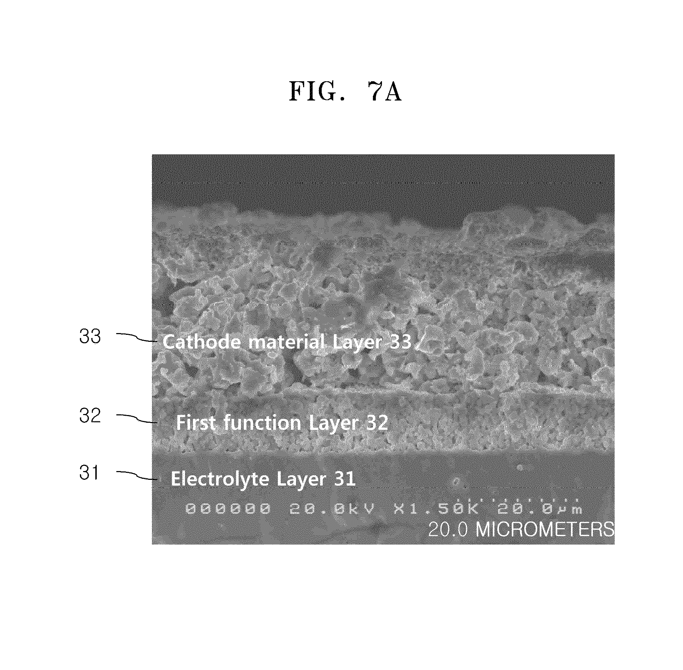

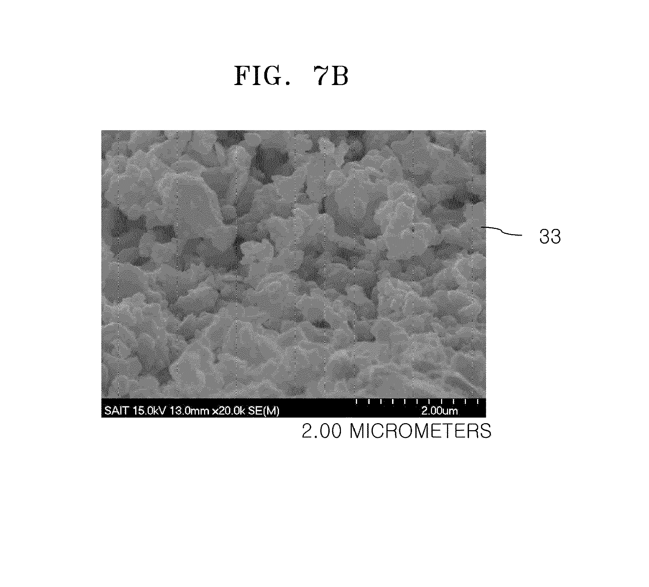

FIGS. 7A and 7B show SEMs of a cross section of a half of the test cell 30 manufactured according to Example 3. Shown in FIG. 7A is an electrolyte layer 31, a first functional layer 32, and a cathode material layer 33. FIG. 7B is an enlarged SEM of the cathode material layer 33 illustrated in FIG. 7A.

Referring to FIG. 7A, unlike the first functional layer 32 having a dense structure, the cathode material layer 33 has a porous structure that allows injected gas (for example, oxygen) to move therethrough easily. The first functional layer 32 having the dense structure was introduced to the test cell 30 so as to prevent an interlayer mismatch between the electrolyte layer 31 and the cathode material layer 33 due to a difference in thermal expansion coefficients, and to prevent formation of a by-product, such as strontium zirconate (SrZrO₃), a non-conductive layer, by spatially separating the electrolyte layer 31 and the first functional layer 32 to prevent diffusion of an element, such as strontium (Sr) between the electrolyte layer 31 and the first functional layer 32.

### Evaluation Example 5: Impedance test of test cells (1)

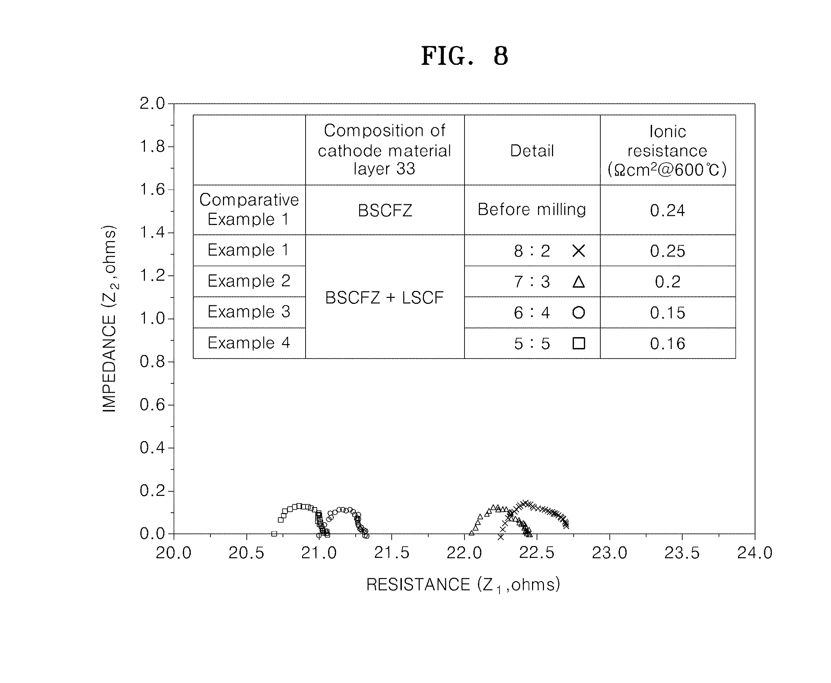

Impedance of each of the test cells 30 manufactured according to Examples 1 to 4 and Comparative Example 1 was measured in an air atmosphere, and results thereof are shown in FIG. 8. As an impedance measuring device, Materials Mates 7260 impedance meter, manufactured by Materials Mates Co., Ltd, was used. Also, an operating temperature of each of the test cells 30 was maintained at about 600 °C.

In FIG. 8, a Z₁ axis represents resistance in ohms, and a Z₂ axis represents impedance in ohms. Also, from the impedance spectra of FIG. 8, ionic resistance was measured and results thereof are shown in the table of FIG. 8. The ionic resistance was measured as follows: when curves were obtained by curve fitting from impedance data prepared according to Examples 1 to 4 and Comparative Example 1 of FIG. 8, a resistance difference between two points where the respective curves and the Z₁ axis meet was measured, and the obtained resistance difference was divided in half to obtain the ionic resistance. In this case, the smaller the ionic resistance, the greater the ionic conductivity.

Referring to FIG. 8, an ionic resistance of each of the test cells 30 manufactured according to Examples 2 to 4 is lower than an ionic resistance of the test cell 30 manufactured according to Comparative Example 1. On the other hand, an ionic resistance of the test cell 30 manufactured according to Example 1 is slightly higher than an ionic resistance of the test cell 30 manufactured according to Comparative Example 1. However, since typically, electronic conductivity (about 330 Scm⁻¹) of a second compound-based material is higher than electronic conductivity (about 30 Scm⁻¹) of a BSCF-based material and a thermal expansion coefficient (15.3×10⁻⁶ K⁻¹) of the second compound-based material is smaller than a thermal expansion coefficient (20.1×10⁻⁶ K⁻¹) of the BSCF-based material, even when the second material is used in the cathode material layer 33, it can be said that there are many advantageous effects in view of the increase of electronic conductivity and the decrease of thermal expansion coefficient as long as ionic resistance is not substantially increased (thermal expansion coefficients are shown in Table 2 below).

### Evaluation Example 6: impedance test of test cells (2)

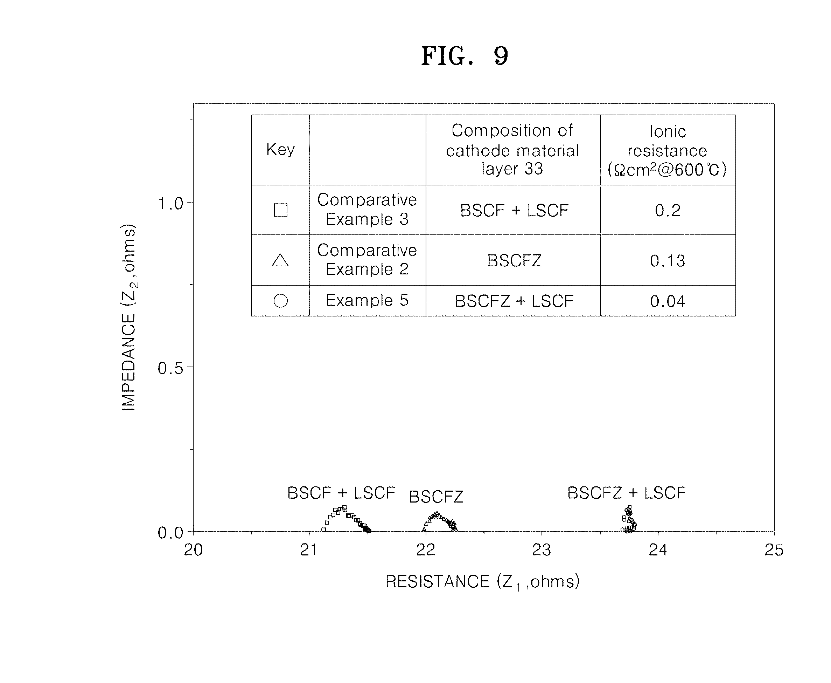

Impedance of each of the test cells 30 manufactured according to Example 5 and Comparative Examples 2 and 3 was measured in an air atmosphere, and results thereof are shown in FIG 9. The used impedance measurement device and the operating temperature of the test cells 30 were the same as in Evaluation Example 5.

In FIG. 9, a Z₁ axis represents resistance, a Z₂ axis represents impedance. Also, from the impedance spectra of FIG. 9, ionic resistance was measured in the same manner as in Evaluation Example 5 and results thereof are shown in the table of FIG. 9.

Referring to FIGS. 8 and 9, as long as other conditions are the same, when the first compounds after milling were used (Example 5 and Comparative Example 2), ionic resistance of the test cells 30 was lower than when the first compounds before milling (Examples 1 to 4 and Comparative Example 1) were used.

Also, referring to FIG. 9, as long as other conditions are the same, when the first compound and the second compound were used together (Example 5), ionic resistance of the test cells 30 was lower than when the first compound was used alone (Comparative Example 2) or when the BSCF and the second compound were used together (Comparative Example 3). Also, from the results obtained from Example 5 and Comparative Example 2, it was confirmed that the relatively small first compound particles and the relatively large second compound particles mutually suppress growth of each particle at the operating temperature of the test cells 30, thereby contributing a decrease in ionic resistance.

### Evaluation Example 7: Thermal expansion coefficient test of cathode material

Thermal expansion coefficients of the first compounds prepared according to Examples 1 to 4 (that is, first compounds before milling), the second compounds used in Examples 1 to 4 (that is, second compounds before milling) and BSCF used in Comparative Example 3 (that is, BSCF before milling) were measured in an air atmosphere, and results thereof are shown in Table 2 below. As a device for measuring thermal expansion coefficients, DIL402PC, manufactured by NETZSCH Co., Ltd, was used, and a test temperature was 600 °C.

**Table 2**

| | Thermal expansion coefficient (×10⁻⁶ K⁻¹) |
|---|---|
| first compound | 17.1 |
| second compound | 15.3 |
| BSCF | 20.1 |

Referring to Table 2 above, it was confirmed that in order to decrease a thermal expansion coefficient of a cathode material including the first compound, it is better to use a second compound with the first compound than BSCF with the first compound. Also, it is understood that the cathode material layer 33 including the first compound and the second compound may have a thermal expansion coefficient that is lower than a thermal expansion coefficient (17.1×10⁻⁶ K⁻¹) of the first compound, that is, a thermal expansion coefficient between 15.3×10⁻⁶ K⁻¹ and 17.1×10⁻⁶ K⁻¹.

According to an embodiment of this disclosure, provided is a first compound having a perovskite crystal structure and represented by Formula 1, a second compound having a perovskite crystal structure and lower ionic conductivity, higher electronic conductivity, and smaller thermal expansion coefficient relative to the first compound, and a material for a solid oxide fuel cell showing improved ionic conductivity, electronic conductivity and small thermal expansion coefficient even at a temperature of 700 °C or less.

According to another embodiment of this disclosure, provided is a cathode for a solid oxide fuel cell including the material.

According to another embodiment of this disclosure, provided is a solid oxide fuel cell operated at a low temperature of 700 °C or less, with improved performance at the low temperature and improved cell stability and durability due to the inclusion of the material.

It should be understood that the exemplary embodiments described herein should be considered in a descriptive sense only and not for purposes of limitation. Descriptions of features or aspects within each embodiment should be considered as available for other similar features or aspects in other embodiments. While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A material for a solid oxide fuel cell, the material comprising:
a first compound having a perovskite crystal structure, a first ionic conductivity, a first electronic conductivity, and a first thermal expansion coefficient, wherein the first compound is represented by Formula 1;
BaₐSr_{b}COₓFe_{y}Z_{1-x-y}O_{3-δ}, Formula 1
wherein
Z is a transition metal element, a lanthanide element, or a combination thereof,
a and b satisfy 0.4 ≤ a ≤ 0.6 and 0.4 ≤ b ≤ 0.6, respectively,
x and y satisfy 0.6 ≤ x ≤ 0.9 and 0.1 ≤ y ≤ 0.4, respectively, and
δ is selected so that the first compound is electrically neutral;
and
a second compound having a perovskite crystal structure, a second ionic conductivity, a second electronic conductivity, and a second thermal expansion coefficient,
wherein the first ionic conductivity is more than the second ionic conductivity, the first electronic conductivity is less than the second electronic conductivity, and the first thermal expansion coefficient is more than the second thermal expansion coefficient, wherein the second compound is represented by Formula 2 or 3;
La_{c}Sr_{d}Co_{w}Fe_{z}O_{3-γ} Formula 2
wherein
c and d satisfy 0.5 ≤ c ≤ 0.7 and 0.3 ≤ d ≤ 0.5, respectively,
w and z satisfy 0.1 ≤ w ≤ 0.3 and 0.7 ≤ z ≤ 0.9, respectively, and
γ is selected so that the second compound is electrically neutral;
AₑSr_{f}Co_{q}MᵣO_{3-ζ}, Formula 3
wherein
A is lanthanum, samarium, praseodymium, or a combination thereof,
M is iron, manganese, or a combination thereof,
e and f satisfy 0.4 ≤ e ≤ 0.8 and 0.2 ≤ f ≤ 0.6, respectively,
q and r satisfy 0 ≤ q ≤ 0.9 and 0.1 ≤ r ≤ 1, respectively,
provided that when A and M are lanthanum and iron, respectively, q = 0, and
ζ is selected so that the second compound is electrically neutral.

2. The material of claim 1, wherein at a temperature of about 500 to about 900 °C, the first compound has an ionic conductivity of about 0.01 to about 0.03 siemens per centimeter, an electronic conductivity of about 10 to about 100 siemens per centimeter, and a thermal expansion coefficient of about 16×10⁻⁶ to about 21×10⁻⁶ per kelvin.

3. The material of claim 1 or 2, wherein at a temperature of about 500 to about 900 °C, the second compound has an ionic conductivity of about 10⁻² to about 10⁻⁷ siemens per centimeter, an electronic conductivity of about 100 to about 1000 siemens per centimeter, and a thermal expansion coefficient of about 11×10⁻⁶ to about 17×10⁻⁶ per kelvin.

4. The material of claim 1, wherein in Formula 1,
- a and b are each 0.5, and
x and y satisfy 0.75 ≤ x ≤ 0.85 and 0.1 ≤ y ≤ 0.15, respectively; or
- each of a and b is 0.5, and
x and y are 0.8 and 0.1, respectively; or
- a sum of x and y satisfy 0.7 ≤ x+y ≤ 0.95; or
- a sum of a and b satisfy 0.9 ≤ a+b ≤ 1.

5. The material of any of claims 1-4, wherein in Formula 1,
the transition metal element is manganese, zinc, nickel, titanium, niobium, copper, or a combination thereof.

6. The material of any of claims 1-4, wherein in Formula 1,
the lanthanide element is holmium, ytterbium, erbium, thulium, lutetium, or a combination thereof.

7. The material of any of claims 1-6, wherein in Formula 2,
c and d are 0.6 and 0.4, respectively, and
w and z are 0.2 and 0.8, respectively.

8. The material of any of claims 1-6, wherein in Formula 3,
- A is praseodymium, M is iron, e and f satisfy 0.4 ≤ e ≤ 0.8 and 0.2 ≤ f ≤ 0.6, respectively, and q and r satisfy 0.2 ≤ q ≤ 0.8 and 0.2 ≤ r ≤ 0.8, respectively; or
- A is lanthanum, M is iron or manganese, e and f satisfy 0.4 ≤ e ≤ 0.8 and 0.2 ≤ f ≤ 0.6, respectively, q = 0, and r satisfies 0.2 ≤ r ≤ 0.8; or
- A is praseodymium, M is iron or manganese, e and f satisfy 0.5 ≤ e
≤ 0.8 and 0.2 ≤ f ≤ 0.5, respectively, q = 0, and r satisfies 0.2 ≤ r ≤ 0.8.

9. The material of any of claims 1-8, wherein a weight ratio of the second compound with respect to the first compound is about 0.53 to about 1.00.

10. A cathode for a solid oxide fuel cell, comprising the material of any of claims 1-9.

11. The cathode of claim 10, wherein the cathode comprises:
a first layer comprising the material of any of claims 1-9; and
a second layer, wherein the second layer comprises a lanthanide metal oxide having a perovskite crystal structure.

12. A solid oxide fuel cell comprising:
the cathode of claim 10 or 11;
an anode; and
an electrolyte interposed between the cathode and the anode.

13. The solid oxide fuel cell of claim 12, further comprising a first functional layer which is interposed between the cathode and the electrolyte and which is effective to prevent or suppress a reaction between the cathode and the electrolyte.

14. The solid oxide fuel cell of claim 13, wherein the first functional layer is gadolinium-doped ceria, samarium-doped ceria, yttrium-doped ceria, or a combination thereof.

15. A solid oxide fuel cell comprising:
a cathode;
an anode;
an electrolyte interposed between the cathode and the anode; and
a second functional layer interposed between the cathode and the electrolyte,
wherein the second functional layer comprises the material of any of claims 1-9.
